# FASCICULE DE BREVET EUROPEEN

(11) **EP 1 176 411 B1**
(45) Date de publication et mention de la délivrance du brevet: **23.01.2008**
(21) Numéro de dépôt: 01401927.7
(22) Date de dépôt: 18.07.2001
(51) Int. Cl.: G01M 15/00

(54) **Moteur optique perfectionné pour essais, en particulier pour mesures sur les paramètres de combustion**
Optisch optimierte Maschine für Testzwecke, insbesondere zum Messen von Verbrennungsparametern
Optically improved engine for testing, particularly for measuring combustion parameters

(30) Priorité: 28.07.2000 FR 0010023
(43) Date de publication de la demande: 30.01.2002
(73) Titulaire: Institut Français du Pétrole, 92852 Rueil-Malmaison Cedex (FR)
(72) Inventeur: Ambrazas, Didier, 92160 Antony (FR); Baritaud, Thierry, 92500 Rueil-Malmaison (FR); Le Coz, Jean-François, 92000 Nanterre (FR); Lessart, Patrice, 78500 Sartrouville (FR); Meder, Stéphane, 92190 Chatenay Malabry (FR); Cedrone, Fabrice, 92500 Rueil-Malmaison (FR)

(56) Documents cités:
- US-A- 3 698 370

## Description

La présente invention concerne un moteur monocylindre adapté à des mesures optiques sur les paramètres de la combustion ayant lieu à l'intérieur la chambre ménagée par une culasse, un cylindre transparent, et un piston.

Ce type de moteur présente un grand intérêt pour visualiser ce qui ce passe dans une chambre de combustion d'un moteur, compte tenu des moyens d'alimentation en carburant, des moyens d'échappement, du type de carburant, de la charge du moteur, ou d'autres paramètres affectant le fonctionnement du moteur à combustion. On pourra, en particulier, observer en temps réel le mode d'inflammation du combustible.

On connaît déjà des moteurs d'essais équipés de cylindre ayant des fenêtres en matériau transparent pour l'observation visuelle, mais ils présentent notamment les inconvénients de fragilité, de difficulté de montage, d'étanchéité, d'adaptabilité à différents types de culasse, de difficulté de nettoyage des moyens d'observation qui sont très rapidement calaminés par la combustion.

La présente invention apporte des solutions avantageuses par rapport à l'art antérieur et concerne donc un moteur optique pour essais, comportant un cylindre en matériau transparent, un piston coopérant avec le cylindre, une culasse refermant le cylindre pour former une chambre étanche de combustion. Le cylindre est appliqué sur le plan de la culasse par un vérin annulaire dont la course permet un accès à l'intérieur de ladite chambre et la culasse est solidarisée à un bâti par l'intermédiaire d'un support monté sur quatre colonnes constituées par des guides coulissants longitudinalement.

Le vérin annulaire peut être pneumatique.

Les colonnes peuvent comprendre une tige guidée par des billes, ou équivalents.

La course des colonnes et la course du vérin annulaire peuvent être déterminées pour permettre le démontage du cylindre et du piston.

La culasse peut être une culasse d'un moteur industriel fixée sur le support.

La présente invention sera mieux comprise et ses avantages apparaîtront plus clairement à la lecture de la description d'un exemple de réalisation, nullement limitatif, illustré par les figures ci-annexées, parmi lesquelles :
- La figure 1 montre schématiquement en coupe le moteur optique selon l'invention, en position de fonctionnement ;
- La figure 2 montre, également en coupe le même moteur en position « ouverte » donnant l'accès au cylindre, et/ou au piston ;
- Les figures 3 et 3A illustrent un système de blocage rapide de la culasse.

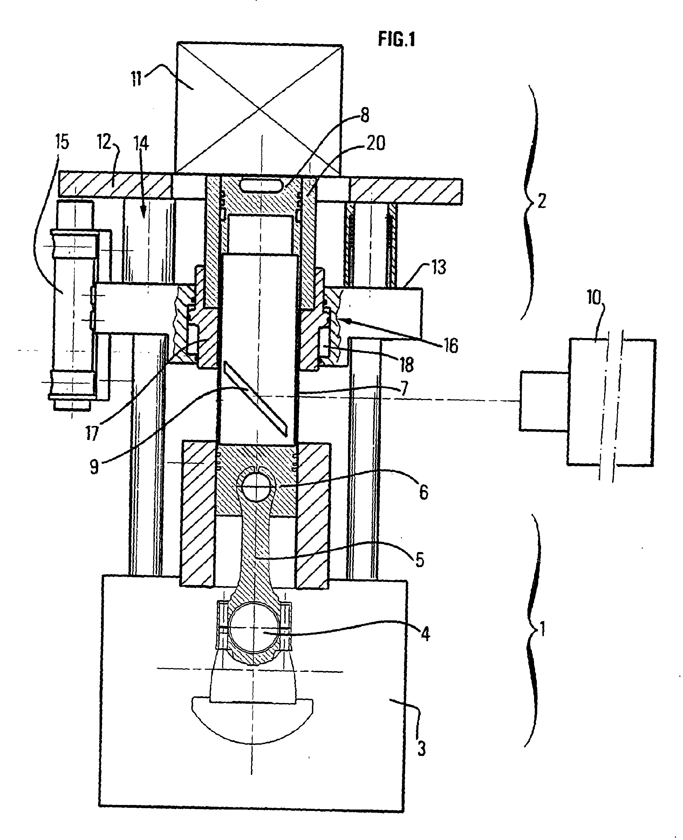

Sur la figure 1, la référence 1 désigne un ensemble dit « bas moteur », la référence 2 désignant un ensemble culasse et chambre de combustion.

L'ensemble « bas moteur » est conventionnel, et comprend un carter 3 dans lequel un vilebrequin 4 est lié au mouvement alternatif d'une bielle 5 et d'un coulisseau 6. Un dispositif d'entraînement et/ou de freinage de la rotation du vilebrequin n'est pas représenté ici car sa conception est classique et à la portée d'un homme du métier. Le coulisseau 6 est prolongé par une entretoise 7 au bout de laquelle un piston 8 est fixé. L'entretoise est fabriquée de telle façon qu'un miroir 9 peut être disposé dans l'axe du piston 8 afin qu'un moyen d'observation 10, par exemple une caméra, visualise, et/ou enregistre, à travers une paroi transparente du piston 8, les phénomènes internes à la chambre de combustion.

L'ensemble 2 est constitué par une culasse schématiquement représentée par l'élément référencé 11. Par culasse, il faut comprendre ici l'ensemble des moyens qui définissent une chambre de combustion, des orifices d'alimentation et d'échappement, des moyens d'alimentation et d'échappement correspondants : soupapes, moyens d'injection, etc...Cet ensemble comprend également les moyens de mécanisation des soupapes, arbre à cames ou équivalents. Les moyens d'entraînement de l'arbre à came ne sont pas représentés, mais à la portée d'un homme du métier.

La culasse est fixée sur un support 12, par exemple une plaque métallique suffisamment rigide. Le support 12 est relié au « bas moteur » 1, et plus précisément au bâti supérieur 13, par des colonnes 14, au nombre de quatre de préférence, déterminées pour être suffisamment rigides latéralement, tout en permettant un coulissement longitudinal vertical pour le soulèvement de la culasse par rapport au cylindre transparent. Ces quatre colonnes peuvent être réalisées avec des guides à billes qui limitent le jeu latéral tout en autorisant une course longitudinale pouvant être comprise, par exemple, entre 5 et 20 cm.

Pour déplacer l'ensemble de la culasse 11 sur son support 12 par l'intermédiaire des guides 14, au moins un vérin pneumatique 15 est fixé sur le bâti 13, la tige étant fixée sur le support 12. Bien entendu, lesdites colonnes 14 sont immobilisées par des moyens de blocages lors du fonctionnement du moteur (moteur fermé). On utilise de préférence des moyens de blocage et déblocage rapides de façon à rapidement permettre l'ouverture du moteur en utilisant le vérin pneumatique 15 On peut utiliser, par exemple, des vis et écrou à pas long coopérant avec des entretoises fendues de manière à être retirées sans nécessiter le retrait complet de l'écrou. D'autres moyens de fixation rapide peuvent être utilisés sans sortir du cadre de la présente invention. On pourra utiliser des vérins hydrauliques maintenus sous pression en blocage.

Le bâti 13 comprend un montage spécial recevant un vérin pneumatique 16. Une pièce annulaire 17 forme un piston se déplaçant vers la culasse par l'application d'une pression, de préférence pneumatique, dans la chambre 18. La partie supérieure du piston annulaire 17 est usinée pour recevoir la base d'un cylindre 20 fabriqué en matière transparente, par exemple du quartz.

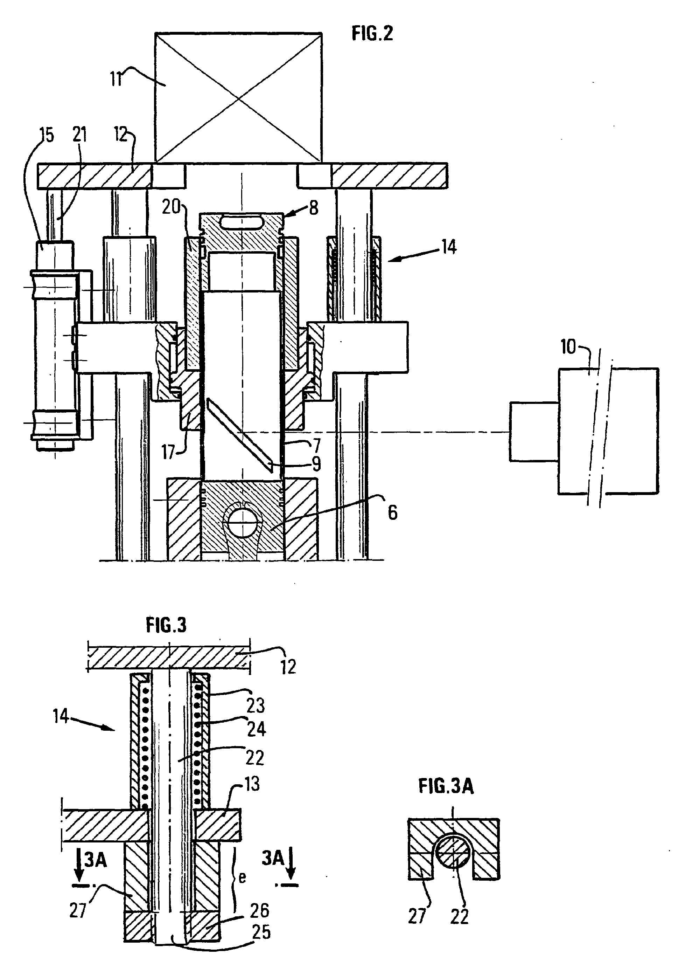

La figure 2 représente la même coupe que celle de la figure 1, mais le moteur est « ouvert », c'est à dire que l'on accède ainsi au piston 8, au cylindre transparent 20, et au plan inférieur de la culasse 11. Il y a deux déplacements qui se complètent et s'ajoutent : le recul du piston annulaire 17 qui supporte le cylindre transparent 20, la levée de la culasse par le déplacement de son support 12 après déblocage des vérins 14, l'actionnement du vérin pneumatique 15, et la sortie de la tige 21.

La figure 3 montre un exemple de fixation rapide de la culasse et de son support 12 sur le bâti 13 du « bas moteur ». La colonne 14 est constituée par une tige 22 fixée sur la plaque support 12 et un cylindre fixée sur le bâti 13. Un ensemble de moyens de roulement 24, par exemple des billes, permet le déplacement longitudinal avec le minimum de jeu latéral. La tige 22 traverse le bâti 13 et se termine par un filetage 25 pour le blocage par un écrou 26. Une pièce entretoise 27 de longueur *l* permet, après son retrait, l'écartement du support 12 d'une distance au plus égale à *l*, par rapport au bâti 13. La figure 3A représente en coupe l'entretoise 27 et la tige 22. La forme en U de l'entretoise permet, dès le déblocage de l'écrou 25, un retrait par déplacement latéral et laisse la liberté à l'écartement de la culasse par rapport au bâti, et d'ainsi ouvrir le moteur.

Il est donc clair que le présent moteur optique peut être ouvert (partiellement) immédiatement par le simple actionnement du vérin pneumatique 17. Ainsi, l'accès à l'intérieur du cylindre est possible pour effectuer un nettoyage et poursuivre les observations optiques à travers le cylindre transparent.

Un autre avantage important, consécutif à la structure du présent moteur, est le fait que l'on peut utiliser, pratiquement directement, une culasse d'un moteur industriel. En effet, la possibilité de réglage qu'offre le montage sur colonnes de la plaque de fixation de la culasse, n'oblige pas à l'étude et à la fabrication d'un montage spécifique à chaque type de culasse (ou même à réaliser une culasse spéciale d'essai). Dans le cas d'étude d'un moteur multi-cylindres, le présent moteur optique est monté sur l'emplacement d'une des chambres de combustion, les différents conduits de refroidissement, d'admission et d'échappement, en communication avec les trois autres têtes de cylindre étant obturés de façon à rendre indépendant et utilisable la culasse industrielle en mono cylindre coopérant avec le mono cylindre transparent.

On peut citer d'autres avantages de la présente invention :
- facilité pour changer le cylindre,
- bon contrôle de l'appui du cylindre sur le plan de joint de la culasse pour réaliser l'étanchéité grâce au vérin annulaire pneumatique,
- adaptabilité à différents types de culasse,
- facilité pour changer de piston inférieur et supérieur,
- grande rigidité de l'ensemble grâce aux colonnes à guidage à billes,
- adaptabilité de ce moteur à différents types d'alésage et de course,
- il n'est pas nécessaire de démonter les tuyaux flexibles des systèmes de refroidissement et de lubrification de la culasse pour « ouvrir » le moteur selon l'invention.

## Revendications

1. Moteur optique pour essais, comportant un cylindre en matériau transparent (20), un piston (8) coopérant avec ledit cylindre, une culasse (11) refermant ledit cylindre pour former une chambre étanche de combustion, **caractérisé en ce que** ledit cylindre est appliqué sur le plan de ladite culasse par un vérin annulaire (17) dont la course permet un accès à l'intérieur de ladite chambre et **en ce que** ladite culasse est solidarisée à un bâti par l'intermédiaire d'un support (12) monté sur quatre colonnes (14) constituées par des guides coulissants longitudinalement.

2. Moteur selon la revendication 1, dans lequel ledit vérin annulaire est pneumatique.

3. Moteur selon l'une des revendications 1 ou 2, dans lequel lesdites colonnes comprennent une tige guidée par des billes.

4. Moteur selon l'une des revendications précédentes, dans lequel la course desdites colonnes et la course dudit vérin annulaire est déterminée pour permettre le démontage du cylindre et du piston.

5. Moteur selon l'une des revendications précédentes, dans lequel ladite culasse est une culasse d'un moteur industriel fixée sur ledit support.

## Claims

1. An optical test motor, comprising a cylinder made of transparent material (20), a piston (8) cooperating with said cylinder, a cylinder head (11) enclosing said cylinder in order to form a sealed combustion chamber, **characterised in that** said cylinder is applied to the plane of said cylinder head by an annular actuator (17), the course of which permits access to the inside of said chamber and **in that** said cylinder head is made integral with a frame by means of a support (12) mounted on four columns (14) constituted by guides which slide longitudinally.

2. The motor according to Claim 1, in which said annular actuator is pneumatic.

3. The motor according to one of Claims 1 or 2, in which said columns include a rod guided by beads.

4. The motor according to one of the preceding claims, in which the course of said columns and the course of said annular actuator is determined in order to permit the dismounting of the cylinder and of the piston.

5. The motor according to one of the preceding claims, in which said cylinder head is a cylinder head of an industrial motor fixed onto said support.

## Patentansprüche

1. Optischer Motor für Tests, umfassend einen Zylinder aus einem transparenten Material (20), einen Kolben (8), der mit dem Zylinder zusammenwirkt, einen Zylinderkopf (11), der den Zylinder verschließt, um eine dichte Brennkammer zu bilden, **dadurch gekennzeichnet, dass** der Zylinder auf die Ebene des Zylinderkopfes durch einen ringförmigen Zylinder (17) gedrückt wird, dessen Hub einen Zugriff auf das Innere der Kammer ermöglicht, und dass der Zylinderkopf mit einem Gehäuse über eine Stütze (12) verbunden ist, die auf vier Säulen (14) montiert ist, die von längs gleitenden Führungen gebildet sind.

2. Motor nach Anspruch 1, bei dem der ringförmige Zylinder pneumatisch ist.

3. Motor nach einem der Ansprüche 1 oder 2, bei dem die Säulen eine durch Kugeln geführte Stange umfassen.

4. Motor nach einem der vorhergehenden Ansprüche, bei dem der Hub der Säulen und der Hub des ringförmigen Zylinders derart bestimmt werden, dass die Demontage des Zylinderkopfes und des Kolbens möglich sind.

5. Motor nach einem der vorhergehenden Ansprüche, bei dem der Zylinderkopf ein Zylinderkopf eines Industriemotors ist, der auf der Stütze befestigt ist.
